# EUROPÄISCHE PATENTSCHRIFT

(11) **EP 2 326 948 B1**
(45) Veröffentlichungstag und Bekanntmachung des Hinweises auf die Patenterteilung: **02.01.2013**
(21) Anmeldenummer: 09744924.3
(22) Anmeldetag: 01.09.2009
(51) Int. Cl.: G01N 29/07

(54) **VORRICHTUNG ZUR ZERSTÖRUNGSFREIEN PRÜFUNG VON PROBEN MITTELS ULTRASCHALLWELLEN**
APPARATUS FOR THE NON-DESTRUCTIVE TESTING OF SAMPLES USING ULTRASONIC WAVES
DISPOSITIF POUR TESTER DES ÉCHANTILLONS SANS LES DÉTRUIRE AU MOYEN D'ONDES ULTRASONORES

(30) Priorität: 03.09.2008 DE 102008045485
(43) Veröffentlichungstag der Anmeldung: 01.06.2011
(73) Patentinhaber: Fraunhofer-Gesellschaft zur Förderung der angewandten Forschung e.V., 80686 München (DE)
(72) Erfinder: SCHUBERT, Frank, 01279 Dresden (DE); BOUHADJERA, Abdelmalek, Ouled Aissa Jijel 18000 (DZ)
(74) Vertreter: Pfenning, Meinig & Partner GbR
(86) Internationale Anmeldenummer: PCT/DE2009/001256
(87) Internationale Veröffentlichungsnummer: WO 2010/025717

(56) Entgegenhaltungen:
- DE-C1- 10 143 755
- FR-A- 1 065 907
- GB-A- 2 215 056
- GREGORY A R ET AL: "Dual-mode ultrasonic apparatus for measuring compressional and shear wave velocities of rock samples" IEEE TRANSACTIONS ON SONICS AND ULTRASONICS USA, Bd. SU-17, Nr. 2, April 1970 (1970-04), Seiten 77-85, XP002585368 ISSN: 0018-9537
- BOUHADJERA A ET AL: "High-frequency ultrasonic testing of young cement-based materials using the 'prism technique'" NDT & E INTERNATIONAL, BUTTERWORTH-HEINEMANN, OXFORD, GB LNKD- DOI:10.1016/J.NDTEINT.2004.07.007, Bd. 38, Nr. 2, 1. März 2005 (2005-03-01), Seiten 135-142, XP004663155 ISSN: 0963-8695

## Beschreibung

Die Erfindung betrifft eine Vorrichtung zur zerstörungsfreien Prüfung von Proben. Die Proben können dabei auch aus kritischen Werkstoffen gebildet sein, die ihre Eigenschaften während der Herstellung, beispielsweise bei einer Aushärtung oder Erstarrung, verändern.

Darüber hinaus kann die Erfindung eingesetzt werden, um andere Werkstoffe zu charakterisieren, die einen Phasenübergang durchlaufen oder sich infolge anderweitiger mechanischer, thermischer, chemischer oder biologischer Prozesse verändern. Ein Einsatz ist aber auch an Festkörpern, bereits erstarrten bzw. erhärteten Proben möglich.

Der genaue Verlauf des Erstarrungs- bzw. Erhärtungsvorgangs von Werkstoffen wie Zement, Mörtel, Gips und Beton entscheidet maßgeblich darüber, ob das fertig ausgehärtete Bauteil seine geplanten mechanischen Eigenschaften, insbesondere seine Festigkeit, erreicht oder nicht. Da der Erhärtungsvorgang von vielen Parametern, wie z.B. den Fähigkeiten der Betonmischer, den Eigenschaften der Ausgangsprodukte (Zement, Zuschläge, Zusätze), dem Wässer/Zement-Verhältnis, der Umgebungstemperatur, der Luftfeuchtigkeit, der Sonneneinstrahlung usw. abhängt, können die Bedingungen für die Erhärtung nie perfekt konstant gehalten werden, was schwankende Werkstoffqualitäten nach sich zieht. Um den tatsächlichen Ablauf des Erstarrungs- bzw. Erhärtungsvorgangs und die Qualität des jeweiligen ausgehärteten Werkstoffs festzustellen, sind daher preiswerte und portable Prüfverfahren notwendig, die über die gesamte Dauer der Erhärtung physikalische Parameter messen, die eine ausreichend gute Korrelation zu den mechanischen Werkstoffeigenschaften aufweisen. Bei diesen Parametern kann es sich z.B. um die Geschwindigkeit und die Dämpfung von Ultraschall-Druck- und -Scherwellen oder um den Feuchtegehalt handeln.

Eine einfache weit verbreitete Methode im Bauwesen besteht in der Entnahme kleiner Bohrkerne, die anschließend im Labor weiteren Tests, wie z.B. Zug- und Biegeversuchen unterzogen werden. Dieses Verfahren kann nicht zerstörungsfrei durchgeführt werden. Die Bohrkerne können nur an wenigen Stellen des Bauteils entnommen werden. Die Bohrlöcher müssen nach der Entnahme wieder verfüllt werden. Außerdem können die Bohrkerne nur in einem weitgehend erhärteten Zustand entnommen und untersucht werden. Die wichtigen frühen Stadien des Erhärtungsvorgangs sowie dessen Gesamtverlauf bleiben unberücksichtigt.

Zur zerstörungsfreien Prüfung der Druckfestigkeit von Beton eignet sich der Rückprallhammer, auch Schmidt-Hammer genannt. Dieser weist den Nachteil auf, dass nur punktuelle Messungen an der Oberfläche möglich sind und er nur im späten Stadium des Erhärtungsvorgangs sinnvoll angewendet werden kann.

Zerstörungsfreie Prüfverfahren, die auch in frühen Stadien des Erhärtungsvorgangs eingesetzt werden können und somit den gesamten Erhärtungsverlauf überwachen, beruhen meist auf der Ultraschalltechnik. Hierbei werden über zumeist piezoelektrische, dauerhaft applizierte Wandler Ultraschallwellen im kHz- bis MHz-Frequenzbereich in das Bauteil eingekoppelt und/oder detektiert und ausgewertet. Dabei können verschiedene Ultraschallparameter mit den Festigkeitseigenschaften des Werkstoffs sowie insbesondere mit charakteristischen Stadien des Erhärtungsvorgangs korreliert werden. Prinzipiell sind Messungen an kleinen isolierten Materialproben (meist kleine Würfel), aber auch direkt am realen Bauteil möglich. Verschiedene Verfahren wurden in der Fachliteratur beschrieben. Diese lassen sich grob einteilen in
- Reflektionsverfahren, bei denen die reflektierten Echos von der (zugänglichen) Oberfläche des Bauteils, von deren Rückwand oder von im Bauteil befindlichen Komponenten ausgewertet werden,
- Transmissionsverfahren, bei denen die durch das Bauteil hindurch laufenden Wellen ausgewertet werden
- Rayleighwellenverfahren, die die an der Oberfläche des Bauteils geführten Oberflächenwellen ausnutzen,
- Resonanz- bzw. Impact-Echo-Verfahren, bei denen Eigenschwingungen - insbesondere Dickenschwingungen - des untersuchten Bauteils vermessen werden,
- Schallemissionsverfahren, bei denen die während des Erhärtungsvorgangs im Bauteilvolumen auftretenden und durch Gefügeumwandlung und Schrumpfung erzeugten Schallemissionen detektiert werden.

Mit diesen Verfahren lassen sich eine Vielzahl für die Werkstoffqualität relevante (i.a. frequenz- und lastabhängige) Werkstoffparameter ermitteln. Dies sind in den meisten Fällen die Schallgeschwindigkeit von Druck- und Scherwellen (entweder direkt über Laufzeitmessungen oder indirekt aus Amplitudenreflektionskoeffizienten über die akustische Impedanz) sowie deren Dämpfungskonstanten. Hinzu kommen ggf. die entsprechenden Rayleighwellenparameter (Schallgeschwindigkeit und Dämpfung), die jedoch direkt mit den elastischen Modulen von Druck- und Scherwellen verknüpft sind.

Keines der genannten Verfahren ist jedoch derzeit in der Lage, die beiden Parameter Schallgeschwindigkeit und Dämpfung für beide Wellenarten und sowohl für Reflektions- als auch Transmissionsanordnung (d.h. für Oberflächen- und Volumenprüfung) zu ermitteln. Meist wird nur ein Wellenmode verwendet (meist die Druckwelle) und es werden lediglich Oberflächen- oder Volumeneigenschaften ermittelt. Zwar lassen sich im Prinzip alle Anordnungen miteinander kombinieren, doch sind dazu zusätzliche (Scher)Wandler und Messaufbauten notwendig. Dies erhöht die Komplexität und damit auch die Kosten für den Gesamtaufbau, was insbesondere im Bauwesen besonders problematisch ist. Werden darüber hinaus zwei Wandler in einer Messzelle integriert, müssen bei gleichzeitiger Messung in der Regel zwei unterschiedliche Laufwege für Druck- und Scherwellen in Kauf genommen werden, was bei heterogenen Medien wie Beton Probleme bereitet, da die Materialparameter entlang verschiedener Laufwege statistisch streuen.

Aus der GB 2 2215 056 A ist die so genannte Prismentechnik bekannt, mit der die Vermessung von Schallgeschwindigkeiten für Druck- und Schwerwellen mit nur einem einzigen (Druckwellen-)Prüfkopf und für ein und denselben Laufweg realisiert werden kann. Bei diesem Verfahren besteht die Materialprobe nicht aus einem Würfel, wie das für viele Standard-Betonprüfungen der Fall ist, sondern sie ist ein Prisma. Durch Änderung des Einfallswinkels der aus einem Wasserbad auf die Prismenbasis einfallenden Druckwellen können im Probeninneren auf einfache Art und Weise Druck- und Scherwellen erzeugt werden, die die Seitenflächen des Prismas senkrecht treffen, dort reflektiert werden und anschließend auf dem gleichen Weg wieder zurück zum Wandler laufen. Die besondere Form der Probe erlaubt es, nur über die einfach zu messenden Laufzeiten von reflektierten Druck- und Scherwellen die zugehörigen Schallgeschwindigkeiten und somit über die bekannte Dichte den Druck- und Schermodul bzw. Elastizitätsmodul und die Poissonzahl des Werkstoffs zu ermitteln.

Die Vorteile der Prismenmethode gegenüber traditionellen Goniometeranordnungen und anderen Verfahren zur Erzeugung von Scherwellen sind ausführlich darin beschrieben.

Mit der Prismentechnik lassen sich jedoch nur Volumeneigenschaften der Probe ermitteln, da ausschließlich die durch das Material hindurch laufenden Wellen ausgewertet werden. Zur Bestimmung von Oberflächeneilich die durch das Material hindurch laufenden Wellen ausgewertet werden. Zur Bestimmung von Oberflächeneigenschaften mittels Reflektion an der Prismenbasis wäre ein zweiter Wandler notwendig. Der entscheidende Nachteil des Verfahrens besteht jedoch darin, dass die kritischen Winkel zur optimalen Einkopplung der beiden Wellentypen während der Erhärtung ständig nachjustiert werden müssen, da sie materialabhängig sind. Dadurch kommt es zu unvermeidbaren geringfügigen Abweichungen vom optimalen Winkel. Diese Abweichungen haben zwar keine direkten Auswirkung auf die Laufzeitmessung, beeinflussen jedoch merklich die Effektivität der Schalleinkopplung und somit auch die der Dämpfungsmessung.

Abschließend sei noch erwähnt, dass das Funktionieren der Prismentechnik maßgeblich auf der besonderen Geometrie des zu untersuchenden Bauteils beruht. Das Verfahren setzt somit zwingend eine isolierte und speziell hergestellte, prismenförmige Materialprobe voraus. Ein Einsatz am realen Betonbauteil, z.B. mittels Aufsatztechnik, ist deshalb nicht möglich.

Von A. R. Gregory et al. ist außerdem in "Dual-Mode Ultrasonic Apparatus for Measuring Compressional and Shear Wave Velocities of Rock Samples"; IEEE TRANSAC-TIONS ON SONICS AND ULTRASONICS USA; Bd. SU-17, Nr. 2. April 1970 (1970-04); Seiten 77-85; ISSN: 0018-9537 eine Vorrichtung zur zerstörungsfreien Prüfung von Proben mittels Ultraschallwellen, bei der mindestens ein Ultraschalldruckwellenwandler an einer Vorlaufzelle angeordnet ist, beschrieben. Die Vorlaufzelle ist auf eine Fläche eines Konversionsprismas aufgesetzt.

Es ist daher Aufgabe der Erfindung, eine zerstörungsfreie Prüfung an Proben mittels Ultraschallwellen durchführen zu können, bei der sowohl Druck-, wie auch Scherwellen genutzt werden können und dabei die Untersuchungen einfach und flexibel an verschiedenen Proben durchführbar sind.

Erfindungsgemäß wird diese Aufgabe mit einer Vorrichtung, die die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Die Vorlaufzelle ist mit einer Flüssigkeit befüllt und mit einer offenen Seite an einer Seite auf eine Fläche (A) eines Konversionsprismas aufgesetzt, so dass die Flüssigkeit und die Fläche (A) in berührendem Kontakt stehen. Das Konversionsprisma stellt einen Festkörper dar und sollte aus einem homogenen Werkstoff gebildet sein. Das Konversionsprisma ist bei der Prüfung mit einer weiteren Fläche (B) auf eine Oberfläche einer zu prüfenden Probe aufgesetzt.

In einer erfindungsgemäßen Alternative kann ein einziger Ultraschalldruckwellenwandler (Tx) an der Vorlaufzelle zu mindestens zwei verschiedenen Positionen bewegt werden und von diesen Positionen Ultraschallwellen emittieren und reflektierte Ultraschallwellen auch wieder detektieren.

In einer weiteren erfindungsgemäßen Alternative kann an mindestens zwei Positionen jeweils ein Ultraschalldruckwellenwandler fest angeordnet sein. Die Positionierung ist dabei so zu wählen, dass die jeweiligen Positionen einen gleichen Abstand zum Mittelpunkt der Fläche (A) des Konversionsprismas, die auf die Probe aufgesetzt ist, aufweisen.

Bei der Erfindung kann eine Messzelle mit einem Ultraschalldruckwellenwandler (Ultraschall-Pulser/Receiver), ein Digitaloszillographen sowie ein Computer mit Steuer- und Auswertesoftware eingesetzt werden. Pulser/Receiver und Digitaloszillograph können auch durch eine entsprechende Computer-Messkarte ersetzt werden, die beides in sich vereint.

Die besonderen technischen Merkmale der vorgestellten Erfindung sind die einseitig offene, flüssigkeitsgefüllte Vorlaufzelle mit einem oder zwei Ultraschalldruckwellenwandlern sowie einem optionalen Dämpfungselement, das ebenfalls optional mit einem Absorber versehene Konversionsprisma zur Erzeugung von senkrecht auf die Probe einfallenden Druck- und Scherwellen mit identischem Laufweg sowie die spezielle Probenanbindung mit der Möglichkeit zur Untersuchung von speziellen, einseitig offenen prismatischen und rechteckigen Werkstoffprobe in einem Gehäuse sowie realen Bauteilen. Mit der Erfindung lassen sich im Idealfall folgende Parameter mit ein und derselben Vorrichtung ermitteln:
1- Schallgeschwindigkeit der Druckwelle im Probenvolumen (Transmission)
2- Amplitudenreflektionskoeffizient der Druckwelle
3- Schallgeschwindigkeit der Druckwelle an der Probenoberfläche (dabei wird der aktuelle Parameter - die Geschwindigkeit der Druckwelle an der Probenoberfläche - aus dem zweiten Eintrag - Amplitudenrefelexionskoeffizient - abgeleitet wird, was auch auf die nachfolgenden Parameter zutrifft)
4- Schallgeschwindigkeit der Scherwelle im Probenvolumen (Transmission)
5- Amplitudenreflektionskoeffizient der Scherwelle
6- Schallgeschwindigkeit der Scherwelle an der Probenoberfläche (abgeleitet aus 5)
7- Schallgeschwindigkeit der Oberflächenwelle (abgeleitet aus 3 und 6)
8- E-Modul und Poissonzahl im Probenvolumen (Transmission, abgeleitet aus 1 und 4)
9- E-Modul und Poissonzahl an der Probenoberfläche (Reflektion, abgeleitet aus 3 und 6)
10- Druck- und Schermodul im Probenvolumen (Transmission, abgeleitet aus 1 und 4)
11- Druck- und Schermodul an der Probenoberfläche (Reflektion, abgeleitet aus 3 und 6)
12- Dämpfung der Druckwelle im Probenvolumen (Transmission)
13- Dämpfung der Scherwelle im Probenvolumen (Transmission)

Diese Möglichkeiten bietet in Kombination keine bisher bekannte technische Lösung.

Die einseitig offene, flüssigkeitsgefüllte Vorlaufzelle mit einem oder zwei Druckwellenwandlern sowie einem optionalen Absorber/Dämpfungselement bewirkt eine reproduzierbare Anregung und Detektion von Ultraschalldruckwellen. Der Vorteil besteht darin, dass im Zusammenspiel mit dem Konversionsprisma durch Modenumwandlung an der akustisch optimal gekoppelten Grenzfläche Flüssigkeit/Prisma auf sehr einfache Art und Weise sowohl Druck- als auch Scherwellen erzeugt werden können. Störende Mehrfachechos in der Vorlaufzelle können durch optionale Absorber effektiv unterdrückt werden.

Das ebenfalls optional mit einem Absorber versehene Konversionsprisma bewirkt die Brechung bzw. die Modenkonversion der in der Vorlaufzelle angeregten Druckwelle in eine Scherwelle. Der wesentliche Vorteil dieser Anordnung besteht darin, dass beide angeregten Wellen (Druck- und Scherwelle) entsprechend den Positionen T1 und T2, der Ultraschalldruckwellenwandler, unter einem Winkel von 45° auf identischen Wegen in das Prisma laufen, anschließend senkrecht auf die Werkstoffprobe treffen, damit wechselwirken und anschließend auf exakt demselben Wege wieder zurück zum Ultraschalldruckwellenwandler laufen. Dieser Laufweg ist unabhängig von den Materialparametern der Probe und erlaubt somit eine dauerhafte reproduzierbare Messung während des gesamten Erstarrungs- bzw. Erhärtungsvorgangs.

Die Seitenfläche D des Konversionsprismas erlaubt in vielen Fällen die Vermessung von Mehrfachechofolgen und führt daher zu einer höheren Genauigkeit bei der Vermessung der Werkstoffparameter. In bestimmten anderen Fällen, in denen die Mehrfachechos eher störend wirken, kann die Seite D optional als Absorber ausgeführt werden. D1 unterdrückt wirksam die Mehrfachechos und führt zu einem besseren Signal/RauschVerhältnis des Primärechos.

Die spezielle Anbindung der Werkstoffproben über die Unterseite des Konversionsprismas erlaubt es, sowohl an einseitig offenen Werkstoffschalungen mit optimaler akustischer Kopplung zum Konversionsprisma sowie mittels Aufsatztechnik auch an realen Konstruktionsbauteilen zu messen. Ein speziell gestaltetes, prismatisches Gehäuse für eine Probe verstärkt das Echosignal aus der Probe, da auch divergente, nicht genau senkrecht auf die Probe treffende Wellenanteile erfasst werden können. Da die Probenanbindung variabel ist, können stattdessen aber auch einfacher gestaltete, rechteckige Gehäuse verwendet werden. Damit Iassen sich auch die im Bauwesen weit verbreiteten, standardisierten Würfelproben untersuchen.

Zusammenfassend lässt sich sagen, dass mit der vorgestellten Erfindung sowohl Druck- und Scherwelleneigenschaften, jeweils in Transmissions- und Reflexionsanordnung, im Labor- wie auch im Baustelleneinsatz auf der Basis ein und derselben Vorrichtung (Messzelle) und während des gesamten Erhärtungsvorgangs gemessen werden können. Diese Messungen lassen sich mittels computerbasierter Ansteuerung, Datenerfassung und -auswertung vollautomatisch durchführen, da lediglich pulsbasierte Laufzeitmessungen durchgeführt werden müssen. Aufgrund der einfach aufgebauten, robusten Vorrichtung ist zudem ein preiswerter und zuverlässiger Einsatz im Bauwesen und anderen Anwendungen möglich.

Nachfolgend soll die Erfindung an Hand von Beispielen näher erläutert werden.

Dabei zeigen:
Figur 1 ein erstes Beispiel einer erfindungsgemäßen Vorrichtung mit einem positionierbaren Ultraschalldruckwellenwandler;
Figur 2 ein zweites Beispiel einer erfindungsgemäßen Vorrichtung mit zwei an zwei Positionen fest installierten Ultraschalldruckwellenwandlern;
Figur 3 ein weiteres Beispiel mit zwei an zwei Positionen fest installierten Ultraschalldruckwellenwandlern und rechteckigem Gehäuse;
Figur 4 ein weiteres Beispiel mit zwei an zwei Positionen fest installierten Ultraschalldruckwellenwandlern, bei dem die Vorrichtung unmittelbar auf eine Werkstoffoberfläche aufgesetzt ist und
Figur 5 ein weiteres Beispiel mit ultraschallabsorbierenden und streuenden Wänden.

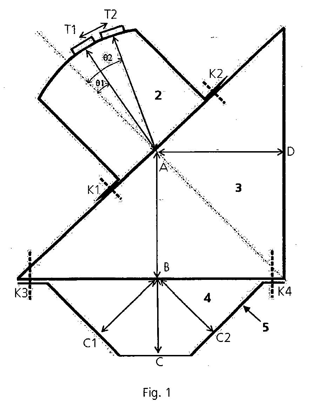

Bei dem in Figur 1 gezeigten Beispiel ist an der Vorrichtung ein Ultraschallnormalwellenprüfkopf als Ultraschallwellendruckwandler Tx vorhanden, der akustisch breitbandige pulsförmige Signale erzeugen und detektieren kann. Er ist am Gehäuse einer einseitig offenen und mit einer Flüssigkeit gefüllten Vorlaufzelle 2 angebracht, wobei sich die aktive Wandlerfläche innerhalb der Flüssigkeit befindet. Die Vorlaufzelle ist mit einem festen Konversionsprisma 3 verbunden und auf eine Oberfläche aufgesetzt. Dabei stehen die Flüssigkeit und die Oberfläche des Konversionsprismas unmittelbar in Kontakt.

Die Probe 4 ist in einem einseitig offenen Gehäuse 5 aufgenommen, in dem sie auch erstarren und/oder erhärten kann, wenn es sich um einen solchen Probenwerkstoff handelt.

Bei dem Ultraschalldruckwellenwandler Tx kann es sich um einen piezoelektrischen Prüfkopf, z.B. einen künstlich oder natürlich fokussierten Immersionsprüfkopf handeln. Dabei sollte die aktive Apertur, der bei der Erfindung eingesetzten Ultraschallwellendruckwandler Tx, in der Flüssigkeit der Vorlaufzelle 2 angeordnet sein. Bei dieser Flüssigkeit, in der sich nur Druckwellen ausbreiten können, handelt es sich in der Regel um Wasser, doch sind prinzipiell auch andere Flüssigkeiten einsetzbar. Als Werkstoff für das Gehäuse der Vorlaufzelle 2 kommen verschiedene Metalle, wie z.B. Baustahl, aber auch andere Festkörper, wie z.B. auch faserverstärkter Kunststoff (GFK, CFK) in Frage.

Der Ultraschalldruckwellenwandler Tx kann entlang einer kreisförmigen Linie so verschoben werden, dass der geometrische Abstand von seiner Mitte, von der Ultraschallwellen emittiert und dort auch detektiert werden können zum Mittelpunkt der Basiskante des Konversionsprismas A immer gleich groß ist. Der Ultraschalldruckwellenwandler Tx kann in mindestens zwei Positionen, T1 und T2, arretiert werden. Die dazugehörigen Winkelpositionen θ1 bzw. θ2 entsprechen den kritischen Winkeln, bei denen die Einkopplung von Druck- bzw. Scherwelle in das Konversionsprisma 3 unter einem Ausfallwinkel von 45° maximiert wird. Die beiden Einfallswinkel θ1 und θ2 hängen bei bekannter Flüssigkeit nur noch von den Werkstoffeigenschaften des Konversionsprismas 3 ab. Ein typischer Werkstoff für ein Konversionsprisma 3 ist Baustahl, doch sind je nach Anwendung auch andere Festkörperwerkstoffe möglich.

Bei einer erfindungsgemäßen Vorrichtung sollten die aktiven Flächen eines jeweiligen Ultraschalldruckwellenwandlers Tx in den Positionen T1, T2 so angeordnet sein, dass der Abstand zum Mittelpunkt der Fläche A jeweils gleich groß ist.

Die Vorlaufzelle 2 inkl. Ultraschalldruckwellenwandler Tx ist fest und flüssigkeitsdicht mit dem Konversionsprima 3 mit einer abgedichteten Schnellspann- oder Schraubverbindung K1 und K2, so dass eine direkte, akustisch optimale Kopplung zwischen Flüssigkeit und dem Prismenwerkstoff gegeben ist. Diese Verbindung lässt sich jedoch lösen, so dass bei Bedarf unterschiedliche Vorlaufzellen 2 mit verschiedenen Konversionsprismen 3, mit verschiedener Dimensionierung und verschiedenen Werkstoffen, kombiniert werden können.

An der Grenzfläche zwischen der Vorlaufflüssigkeit und dem Konversionsprisma 3 bei A wird je nach Position des Ultraschalldruckwellenwandlers Tx eine Druck- (Position T1) bzw. Scherwelle (Position T2) erzeugt, die jeweils unter einem Winkel von 45° zum Einfallslot in das Konversionsprisma 3 gebrochen wird. Hierbei ist zu betonen, dass ein exaktes Einhalten der kritischen Einfallswinkel im Gegensatz zu Goniometeranordnungen im vorliegenden Fall nicht zwingend notwendig ist. Durch die mehr oder weniger starke Fokussierung des Ultraschallwellenbündels gibt es bereits in der "Nähe" des kritischen Einfallswinkels immer Wellenanteile, die unter dem "richtigen" Winkel von 45° in das Konversionsprisma 3 gebrochen werden.

Nach Passieren der Wasser/Prismen-Grenzfläche A fällt die jeweilige Welle (Druck- oder Scherwelle) senkrecht auf die Fläche B des Konversionsprismas 3, die in direktem Kontakt mit dem ggf. erstarrenden und /oder erhärtenden Werkstoff der Probe 4 steht. An dieser Grenzfläche kommt es sowohl zu einer Reflektion, als auch zu einer Transmission des jeweiligen Wellentyps. Nun gilt es zwei Laufwege der Ultraschallwellen zu unterscheiden:
Laufweg 1:
   Der bei B transmittierte Anteil läuft weiter durch den Werkstoff und wird an der hinteren Grenzfläche C des Gehäuses 5 total reflektiert. Danach läuft die Welle wieder zurück, tritt (teilweise) wieder durch die Fläche B des Konversionsprismas 3 hindurch, wird an der Fläche A als Druckwelle (teilweise) in die in der Vorlaufzelle 2 enthaltene Flüssigkeit zurück gebrochen und kann schließlich an der Position T1 oder T2 des Ultraschalldruckwellenwandlers Tx als Echosignal detektiert werden.

Aus der Laufzeit des Echos der reflektierten Ultraschallwellen mit dem Laufweg Tx-A-B-C-B-A-Tx, den bekannten Laufstrecken in der Vorlaufzelle 2 (TxA), im Konversionsprisma 3 (AB) und in der Probe 4 (BC) sowie den bekannten Schallgeschwindigkeiten in der Flüssigkeit und im Prismenwerkstoff, kann die effektive Schallgeschwindigkeit des Werkstoffs der Probe 4, gemittelt über die in der Probe 4 zurückgelegte Strecke BC, berechnet werden.

Aus der Amplitude des detektierten Echos wiederum lässt sich über den Vergleich mit einer (bekannten) Referenzprobe die effektive Schalldämpfung des Werkstoffs berechnen. Beide ermittelten Parameter spiegeln somit Volumeneigenschaften des Werkstoffs wider.

Das Gehäuse 5 für die Probe 4 ist fest mit dem Konversionsprisma verbunden (K3 und K4), wobei der erstarrende bzw. erhärtende Werkstoff in direktem Kontakt mit der Fläche B des Konversionsprismas 3 steht. Diese Verbindung lässt sich ebenfalls lösen, so dass verschiedene Prismen mit unterschiedlichen Gehäusen 5 verbunden werden können.

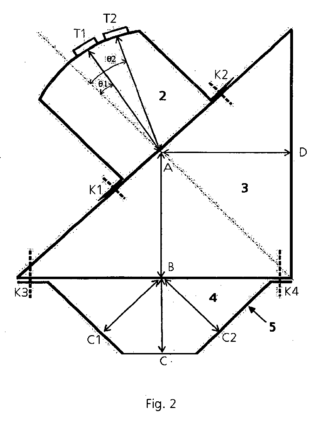

Das Gehäuse 5 ist bei den in den Figuren 1 und 2 gezeigten Beispielen prismatisch gestaltet. Allerdings wird die Spitze der Schalung derart abgeschnitten, dass die Strecken BC1 und BC2 jeweils die gleiche Länge wie die Strecke BC haben und eine Trapezform erhalten ist. Damit werden auch divergente Wellenanteile erfasst, die an der Fläche A nicht exakt im 45° Winkel gebrochen werden und bei der Fläche B folglich nicht exakt senkrecht durch die Grenzfläche laufen. Diese divergenten Anteile treffen jedoch teilweise senkrecht auf die Flächen C1 und C2 des Gehäuses 5 auf und werden dort total reflektiert. Mit diesen E-chobeiträgen lässt sich das Signal/Rauschverhältnis weiter verbessern.

Da die von den Flächen C, C1 und C2 des Gehäuses 5 zurückreflektierten Anteile an der Fläche B nicht nur transmittiert, sondern teilweise auch reflektiert werden, kommt es zwischen den Flächen B und C bei moderater Materialdämpfung zu Mehrfachreflektionen, die auch am Ort des Ultraschalldruckwellenwandlers Tx detektiert werden können (z.B. Tx-A-B-C-B-C-B-A-Tx). Diese Mehrfachechos ermöglichen zusätzliche Messungen, die die Genauigkeit der ermittelten Materialparameter weiter erhöhen.

### Laufweg 2:

Der bei der Fläche B reflektierte Anteil der Ultraschallwellen wird zur Fläche A zurück reflektiert und dort als Druckwelle (teilweise) wieder in die in der Vorlaufzelle 2 enthaltene Flüssigkeit zurück gebrochen und schließlich am Ort des Ultraschalldruckwellenwandlers Tx detektiert. Aus der Amplitude der an der Fläche B reflektierten Ultraschallwellen kann über den Vergleich mit einer Totalreflexion an Luft, den bekannten Werkstoffparametern von Flüssigkeit und dem Werkstoff, aus dem das Konversionsprisma gebildet ist, sowie der Dichte des Werkstoffs (die wiederum aus der bestimmten Masse des bekannten Probenvolumens im Gehäuse 5 hervorgeht), der Amplitudenreflexionskoeffizient, daraus die akustische Impedanz und schließlich die Schallgeschwindigkeit im oberflächennahen Bereich der Probe 4 ermittelt werden.

Da die im Konversionsprisma 3 zurücklaufenden Wellenanteile an der Grenzfläche A nicht nur transmittiert, sondern teilweise auch in Richtung der Grenzfläche D reflektiert werden, kommt es zu Mehrfachreflektionen (z.B. Tx-A-B-A-D-A-B-A-Tx), die ähnlich wie im obigen Transmissionsfall zu weiteren Messwerten und somit zu noch genaueren ermittelbaren Werkstoffparametern führen.

An der Position T1 werden Druckwellen im Konversionsprisma 3 erzeugt, die beide genannten Laufwege nehmen. Ein Teil der Wellen wird bei B reflektiert und der andere Teil transmittiert. Von Position T2 werden Scherwellen in der gleichen Form emittiert, reflektiert und transmittiert.

Bei dem in Figur 2 gezeigten Beispiel, sind bereits zwei gleichartige Ultraschalldruckwellenwandler Tx fest in die Vorlaufzelle 2 eingebaut. Dabei ist einer in Position T1, der andere in Position T2 fest installiert. Damit entfällt die Notwendigkeit der Verschiebung des einen Ultraschalldruckwellenwandlers Tx, wie sie beim Beispiel nach Figur 1 erforderlich ist. Mit einer Ausführung nach dem in Figur 2 gezeigten Beispiel kann eine robustere, schnellere und reproduzierbarere sehr zeitnahe Messung erreicht werden. Auch kann die mit der Flüssigkeit gefüllte Vorlaufzelle 2 kann damit einfacher und preiswerter gestaltet werden.

Ansonsten treffen die Aussagen, die für die Ausbildung und die Funktionalität zum Beispiel nach Figur 1 gemacht worden sind, auch für dieses Beispiel zu. Es ist lediglich keine Veränderung der Position der Ultraschalldruckwellenwandler Tx mehr erforderlich. Die beiden Ultraschalldruckwellenwandler Tx an den Positionen T1 und T2 können alternierend betrieben und für die Prüfung der Probe 4 genutzt werden.

Das Gehäuse 5 für die Probe 4 bei den Beispielen nach den Figuren 1 und 2 ist prismatisch und in Trapezform ausgebildet, um auch divergente Anteile der durch die Fläche B transmittierten Wellen zu erfassen. Der dominante Beitrag der Reflektion von der Rückseite des Gehäuses 5 wird jedoch von den von der Fläche C reflektierten Ultraschallwellen geleistet. Daher kann ggf. die prismenförmige Geometrie des Gehäuses 5 auch durch eine einfachere, z.B. rechteckige oder bereits standardisierte würfelförmige Geometrie ersetzt werden. Wichtig ist dabei lediglich, dass eine parallel zur Fläche B ausgerichtete Fläche C am Gehäuse 5 vorhanden ist, deren Abstand zur Fläche B bekannt ist.

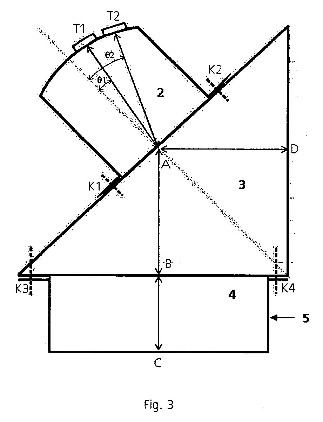

Bis auf das beim in Figur 3 gezeigten Beispiel rechteckig ausgebildete Gehäuse 5 kann die Vorrichtung aber gemäß den Beispielen nach den Figuren 1 oder 2 ausgebildet werden.

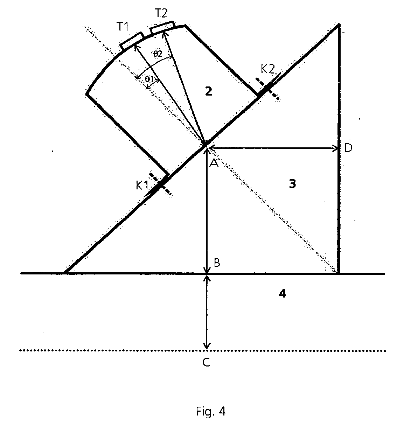

Über den in Ausführungsbeispiel 1 beschriebenen Laufweg 2 kann aus dem Amplitudenreflexionskoeffizienten lediglich die Schallgeschwindigkeit von Druck- bzw. Scherwelle ermittelt werden, nicht aber deren Dämpfung. Dafür benötigt dieser Laufweg aber lediglich die Oberfläche einer Probe 4. Somit kann die Messung nicht nur an einer Laborprobe, sondern auch an einem realen Bauteil im Baustelleneinsatz durchgeführt werden. Dazu ist lediglich das Aufsetzen des Konversionsprismas 3 unmittelbar auf die Werkstoffoberfläche notwendig, wobei auf eine ausreichend gute und stabile akustische Kopplung geachtet werden muss. Ist eine Reflektion von einer zweiten Grenzfläche C in bekanntem Abstand vorhanden, können auch hier Transmissionseigenschaften des Werkstoffs ermittelt werden, analog zu der im Beispiel nach Figur 1 beschriebenen Vorgehensweise. Das Beispiel nach Figur 4 lässt sich beliebig mit den Ausführungsbeispielen nach den Figuren 1 oder 2 kombinieren.

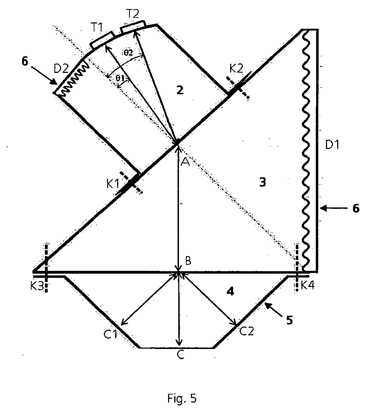

Bei großem Abstand der Flächen B und C und/oder geringen Schallgeschwindigkeiten im Werkstoff der Probe 4, beispielsweise beim Erstarren oder Erhärten, treffen die reflektierten Schallwellen gemäß Laufweg 1 (Tx-A-B-C-B-A-Tx) vergleichsweise spät am Ultraschalldruckwellenwandler Tx ein. Dadurch kann es zu Überlagerungen mit Mehrfachechofolgen, kommen, die durch die Seite des Konversionsprismas 3 bei D1 (z.B. Tx-A-B-A-Dl-A-B-A-Tx) oder die Gehäuseoberseite der Vorlaufzelle 2 bei D2 (z.B. Tx-A-D2-A-Tx) erzeugt werden. Um diese störenden reflektierten Wellen zu unterdrücken bzw. zu eliminieren, sind die Flächen D1 und D2 beim in Figur 5 gezeigten Beispiel schalldämpfend ausgebildet. Durch eine Strukturierung der in das Innere des Konversionsprisma 3 weisenden Oberfläche, z.B. als ein Zick-Zack-Muster der Oberflächen werden auftreffende Ultraschallwellen diffus in alle Richtungen gestreut und nicht mehr als kohärentes Bündel reflektiert. Die diffus gestreuten Anteile werden zudem durch ein stark absorbierendes Material, das sich hinter der strukturierten gezackten Oberfläche befindet (z.B. Knetmasse), abgeschwächt. Die Wirkung des Absorbermaterials beruht dabei auf zweierlei Mechanismen. Zum einen wird der effektive akustische Impedanzunterschied an der Grenzfläche gegenüber dem Fall einer Reflexion an Luft deutlich verringert, so dass weniger Wellenanteile zurückgestreut oder reflektiert werden. Die nunmehr verstärkt in das Absorbermaterial eindringenden Wellenanteile werden dort weitgehend dissipiert, so dass es zu keinen signifikanten Reflexionen an der (glatten) Rückwand des Absorbers 6 mehr kommen kann. Der oder die Absorber 6 können dabei allein oder auch in Kombination mit einer strukturierten Oberfläche und/oder einem Absorbermaterial gebildet sein.

Die strukturierte Oberfläche D1 kann durch direkte mechanische Bearbeitung der Prismenoberfläche ausgebildet werden. Auf diese wird die Absorbermasse bündig aufgebracht und ggf. eingehaust. Für die gezackte Oberfläche D2 und dem zugehörigen Gehäuse kann in der linken oberen Ecke der Vorlaufzelle 2 ein schallweiches, d.h. mit einer niedrigen akustischen Impedanz versehenes Material (z.B. Plexiglas) verwendet werden.

Beide den Schall dämpfenden und ggf. streuenden Flächen D1 und D2 können gemeinsam, je nach Anwendung aber auch unabhängig voneinander zum Einsatz kommen.

Im Gegensatz zur Darstellung, ist es nicht zwingend erforderlich, die gesamten Oberflächen bei D1 und D2 zu strukturieren bzw. mit einer Absorbermasse zu versehen. Es kann ausreichend sein, dies auf Flächenbereiche zu begrenzen, von denen ggf. reflektierte Schallwellen die Detektion besonders stören.

Dieses Ausführungsbeispiel lässt sich beliebig mit anderen in den Figuren 1 bis 4 gezeigten Beispielen kombinieren.

## Patentansprüche

1. Vorrichtung zur zerstörungsfreien Prüfung von Proben mittels Ultraschallwellen,
bei der mindestens ein Ultraschalldruckwellenwandler (Tx) an einer Vorlaufzelle (2) angeordnet ist, dabei die Vorlaufzelle (2) mit einer Flüssigkeit befüllt ist und die Vorlaufzelle (2) mit einer offenen Seite an einer Seite auf eine Fläche (A) eines Konversionsprismas (3), in Form eines Festkörpers, aufgesetzt ist, so dass die Flüssigkeit und die Fläche (A) in berührendem Kontakt stehen; dabei das Konversionsprisma (3) mit einer weiteren Fläche (B) auf eine Oberfläche einer zu prüfenden Probe (4) aufgesetzt ist;
**dadurch gekennzeichnet dass**
der mindestens eine oder zwei Ultraschalldruckwellenwandler (Tx) an der Vorlaufzelle (2) an mindestens zwei Positionen (T1, T2) so positionierbar ist oder so positioniert sind, dass sie in einem gleichen Abstand zum Mittelpunkt der Fläche (A) des Konversionsprismas (3), das mit der Fläche (B) auf die Probe (4) aufgesetzt ist, angeordnet sind.

2. Vorrichtung nach Anspruch 1, **dadurch gekennzeichnet, dass** die Probe (4) in einem mit dem Konversionsprisma (3) verbindbaren Gehäuse (5) aufgenommen ist, das rechteckig, würfelförmig oder prismatisch ausgebildet ist.

3. Vorrichtung nach Anspruch 1 oder 2, **dadurch gekennzeichnet, dass** die dritte Fläche (D) des Konversionsprismas (3) und/oder eine Oberfläche (D2) des Gehäuses der Vorlaufzelle (2), die der Fläche (A) des Konversionsprismas (3) gegenüberliegt, Ultraschallwellen mit einem Absorber (6) absorbierend und/oder streuend ausgebildet ist/sind.

4. Vorrichtung nach Anspruch 3, **dadurch gekennzeichnet, dass** auf die dritte Fläche (D) des Konversionsprismas (3) und/oder die Oberfläche (D2) des Gehäuses der Vorlaufzelle (2), die der Fläche (A) des Konversionsprismas (3) gegenüberliegt, eine Absorbermasse aufgebracht ist.

5. Vorrichtung nach Anspruch 3 oder 4, **dadurch gekennzeichnet, dass** die dritte Fläche (D) des Konversionsprismas (3) und/oder die Oberfläche (D2) des Gehäuses der Vorlaufzelle (2), die der Fläche (A) des Konversionsprismas (3) gegenüberliegt, strukturiert ausgebildet ist/sind.

6. Vorrichtung nach Anspruch 2, **dadurch gekennzeichnet, dass** ein Gehäuse (5) so gestaltet und dimensioniert ist, dass seine Ultraschallwellen reflektierenden Flächen (C, C1, C2) jeweils gleiche Abstände zum Mittelpunkt der Fläche (B) des Konversionsprismas (3) aufweisen.

7. Vorrichtung nach einem der vorhergehenden Ansprüche, **dadurch gekennzeichnet, dass** die Apertur des/der Ultraschalldruckwellwandler(s) (Tx) in der in der Vorlaufzelle (2) enthaltenen Flüssigkeit angeordnet ist/sind.

8. Vorrichtung nach einem der vorhergehenden Ansprüche, **dadurch gekennzeichnet, dass** gleichartige Ultraschalldruckwellenwandler (Tx) vorhanden sind.

9. Vorrichtung nach einem der vorhergehenden Ansprüche, **dadurch gekennzeichnet, dass** die aktive Fläche eines Ultraschalldruckwellenwandlers (Tx) in den Positionen (T1, T2) so angeordnet ist, dass der Abstand zum Mittelpunkt der Fläche (A) jeweils gleich groß ist.

10. Vorrichtung nach einem der vorhergehenden Ansprüche, **dadurch gekennzeichnet, dass** die Positionen (T1, T2) so gewählt sind, dass Druckwellen in einem Winkel von jeweils 45° in das Konversionsprisma (3) emittierbar sind.

## Claims

1. Apparatus for the non-destructive testing of samples using ultrasonic waves,
in which at least one ultrasonic pressure wave transducer (Tx) is arranged at a forward cell (2), wherein the forward cell (2) is filled with a liquid and the forward cell (2) is placed with an open side at one side onto a surface (A) of a conversion prism (3), in the form of a solid body, so that the liquid and the surface (A) are in touching contact; wherein the conversion prism (3) is placed with a further surface (B) onto a surface of a sample (4) to be tested;
**characterised in that**
the at least one or two ultrasonic pressure wave transducers (Tx) at the forward cell (2) can be positioned or are positioned at at least two positions (T1, T2) so that they are arranged equidistantly from the centre of the surface (A) of the conversion prism (3), which is placed with the surface (B) onto the sample (4).

2. Apparatus according to Claim 1, **characterised in that** the sample (4) is received in a housing (5) which can be connected to the conversion prism (3) and which is configured as rectangular, cuboid or prismatic.

3. Apparatus according to Claim 1 or 2, **characterised in that** the third surface (D) of the conversion prism (3) and/or a surface (D2) of the housing of the forward cell (2), which is disposed opposite the surface (A) of the conversion prism (3), is/are configured as absorbing and/or scattering ultrasonic waves with an absorber (6).

4. Apparatus according to Claim 3, **characterised in that** an absorber material is applied to the third surface (D) of the conversion prism (3) and/or the surface (D2) of the housing of the forward cell (2) which is disposed opposite the surface (A) of the conversion prism (3).

5. Apparatus according to Claim 3 or 4, **characterised in that** the third surface (D) of the conversion prism (3) and/or the surface (D2) of the housing of the forward cell (2) which is disposed opposite the surface (A) of the conversion prism (3) is/are configured in a structured manner.

6. Apparatus according to Claim 2, **characterised in that** a housing (5) is designed and dimensioned so that its surfaces (C, C1, C2) reflecting ultrasonic waves are each equidistant from the centre of the surface (B) of the conversion prism (3).

7. Apparatus according to one of the preceding claims, **characterised in that** the aperture of the ultrasonic pressure wave transducer(s) (Tx) is/are arranged in the liquid contained in the forward cell (2).

8. Apparatus according to one of the preceding claims, **characterised in that** ultrasonic pressure wave transducers (Tx) of the same kind are present.

9. Apparatus according to one of the preceding claims, **characterised in that** the active surface of an ultrasonic pressure wave transducer (Tx) is arranged in the positions (T1, T2) so that the distance from the centre of the surface (A) is in each case of equal size.

10. Apparatus according to one of the preceding claims, **characterised in that** the positions (T1, T2) are selected so that pressure waves can be emitted at an angle of 45° in each case into the conversion prism (3).

## Revendications

1. Dispositif de contrôle non destructif d'échantillons au moyen d'ondes ultrasonores,
dans lequel au moins un transducteur d'ondes de pression ultrasonores (Tx) est agencé contre une cellule de tête (2), où la cellule de tête (2) est remplie d'un liquide et la cellule de tête (2) est posée avec un côté ouvert contre un côté sur une surface (A) d'un prisme de conversion (3), sous la forme d'un corps solide, de telle sorte que le liquide et la surface (A) sont en contact contigu ; où le prisme de conversion (3) est posé avec une autre surface (B) contre une surface d'un échantillon (4) à contrôler ;
**caractérisé en ce que**
le au moins un ou deux transducteurs d'ondes de pression ultrasonores (Tx) peuvent être positionnés ou sont positionnés contre la cellule de tête (2) contre au moins deux positions (T1, T2), de telle sorte qu'ils sont agencés à une même distance du point central de la surface (A) du prisme de conversion (3) qui est posé avec la surface (B) sur l'échantillon (4).

2. Dispositif selon la revendication 1, **caractérisé en ce que** l'échantillon (4) est logé dans un boîtier (5) rectangulaire, cubique ou prismatique, apte à être raccordé au prisme de conversion (3).

3. Dispositif selon la revendication 1 ou 2, **caractérisé en ce que** la troisième surface (D) du prisme de conversion (3) et/ou une face supérieure (D2) du boîtier de la cellule de tête (2), qui est située en regard de la surface (A) du prisme de conversion (3), sont réalisées pour absorber des ondes ultrasonores avec un absorbeur (6) et/ou pour disperser des ondes ultrasonores.

4. Dispositif selon la revendication 3, **caractérisé en ce qu'**une masse d'absorption est posée sur la troisième surface (D) du prisme de conversion (3) et/ou sur la face supérieure (D2) du boîtier de la cellule de tête (2), qui est située en regard de la surface (A) du prisme de conversion (3).

5. Dispositif selon la revendication 3 ou 4, **caractérisé en ce que** la troisième surface (D) du prisme de conversion (3) et/ou la face supérieure (D2) du boîtier de la cellule de tête (2), qui est située en regard de la surface (A) du prisme de conversion (3), est/sont structurée(s).

6. Dispositif selon la revendication 2, **caractérisé en ce qu'**un boîtier (5) est configuré et dimensionné de telle sorte que ses surfaces (C, C1, C2) réfléchissant des ondes ultrasonores sont respectivement situées à une même distance du point central de la surface (B) du prisme de conversion (3).

7. Dispositif selon l'une quelconque des revendications précédentes, **caractérisé en ce que** l'ouverture du/des transducteur(s) d'ondes de pression ultrasonores (Tx) est/sont agencées dans le liquide contenu dans la cellule de tête (2).

8. Dispositif selon l'une quelconque des revendications précédentes, **caractérisé en ce qu'**il est prévu des transducteurs d'ondes de pression ultrasonores (Tx) de même type.

9. Dispositif selon l'une quelconque des revendications précédentes, **caractérisé en ce que** la surface active d'un transducteur d'ondes de pression ultrasonores (Tx) est agencée dans les positions (T1, T2) de telle sorte que la distance par rapport au point central de la surface (A) est respectivement identique.

10. Dispositif selon l'une quelconque des revendications précédentes, **caractérisé en ce que** les positions (T1, T2) sont choisies de telle sorte que des ondes de pression peuvent être émises dans le prisme de conversion (3) selon un angle respectif de 45°.
